# EUROPÄISCHE PATENTSCHRIFT

(11) **EP 3 423 171 B1**
(45) Veröffentlichungstag und Bekanntmachung des Hinweises auf die Patenterteilung: **18.01.2023**
(21) Anmeldenummer: 17719489.1
(22) Anmeldetag: 28.02.2017
(51) Int. Cl.: B01D 53/14, F04B 39/06

(54) **VERFAHREN ZUM LÖSEN VON GASEN IN LIQUIDEN SOWIE VERWENDUNG EINER VORRICHTUNG ZU DESSEN DURCHFÜHRUNG**
PROCESS FOR DISSOLVING GASES IN LIQUIDS AND USE OF A DEVICE FOR CARRYING OUT SAID PROCESS
PROCÉDÉ DE DISSOLUTION DE GAZ DANS DES LIQUIDES AINSI QUE L'UTILISATION D'UN DISPOSITIF POUR SA MISE EN OEUVRE

(30) Priorität: 29.02.2016 DE 102016103554
(43) Veröffentlichungstag der Anmeldung: 09.01.2019
(73) Patentinhaber: Karlsruher Institut für Technologie, 76131 Karlsruhe (DE)
(72) Erfinder: TRIMIS, Dimosthenis, 90762 Fürth (DE); ZARZALIS, Nikolaos, 76133 Karlsruhe (DE)
(74) Vertreter: Fitzner, Uwe
(86) Internationale Anmeldenummer: PCT/EP2017/054627
(87) Internationale Veröffentlichungsnummer: WO 2017/148935

(56) Entgegenhaltungen:
- EP-A1- 1 329 253
- EP-A1- 2 463 525
- WO-A1-01/77528
- CN-U- 201 997 232
- DE-A1- 19 818 631
- FR-A1- 2 746 385
- GB-A- 2 504 724
- US-A- 5 771 693

## Beschreibung

Die vorliegende Erfindung betrifft ein Verfahren zur physikalischen Absorption (Lösung) von Gasen in Liquiden und die Verwendung einer Vorrichtung zur Durchführung des Verfahrens.

Nach dem Stand der Technik erfolgt die Absorption von Kohlendioxid in zwei Schritten.

Im ersten Schritt wird die vollständige Menge Kohlendioxid auf den Enddruck komprimiert. Im zweiten Schritt wird dann das komprimierte Kohlendioxid in das Wasser injiziert. Darüber hinaus gibt es auch Absorber, bei denen das Absorptionsmittel als Spray eingebracht wird (z. B. Druckwasserwäsche). Aber auch in diesem Fall erfolgt die Kompression des gesamten Rohgases nahezu isentrop in einem Verdichter vor Eintritt in den Absorber.

In der WO 2014/02396 A1 wird eine Vorrichtung zur Absorption von Gasen aus Biogasen in Flüssigkeiten beschrieben. Dabei wird eine Flüssigkeit mit hohem Druck in einen Druckbehälter mit dem zu absorbierenden Gas gepumpt. Durch das Einpumpen der Flüssigkeit wird das dem zu absorbierenden Gas zur Verfügung stehende Volumen verringert.

In der US 2007/0151528 A1 wird ein Kolbenverdichter beschrieben, in welchem eine Flüssigkeit unter bestimmtem Druck und Temperatur eingesprüht wird, so dass die Tröpfchen in der Kompressionskammer explodieren.

Aus Markus Reppich u.a., Vergleich verschiedener Aufbereitungsverfahren von Biogas zur Einspeisung in das Erdgasnetz, Chemieingenieurtechnik 2009, 81, S. 211 - 223 und Manuel Götz u.a., Optimierungspotenzial von Wäschen zur Biogasaufbereitung, Chemieingenieurtechnik 2011, 83, S. 800 - 866, sind Verfahren zur Reinigung von Biogas bekannt. In einer Alternative wird hierbei die Druckwasserwäsche verwendet. Dabei wird Kohlendioxid bei Drucken bis zu 15 bar in Wasser absorbiert und gleichzeitig kann eine Entschwefelung stattfinden. Die Aufbereitung erfolgt in den vier Verfahrensschritten Filterung, Verdichten, Absorption, Trocknen. Durch Filtern des Rohbiogases werden Wassertropfen und Stäube in Koaleszenzfiltern abgeschieden. Das Verdichten folgt ein- oder zweistufig auf 7 - 15 bar und das sich hierbei erhitzende Gas wird anschließend gekühlt. Komponenten der Gasaufbereitungsanlage sind ein mehrstufiger Verdichter, eine Absorptionssäule, eine Kohlendioxid-Entspannungssäule, eine CO2-Tripper-Säule und ein Gastrockner. Dieses Verfahren betrifft somit alleine die Aufreinigung von Biogas, wobei Methan von anderen Bestandteilen gereinigt werden soll. Wie bei allen Verfahren des Standes der Technik wird auch in diesem Fall das gesamte zu absorbierende gasförmige Fluid nahezu isentrop komprimiert.

Als weiterer Stand der Technik können die folgenden Dokumente angeführt werden: EP 1 329 253 A1; GB 2 504 724 A; WO 01/77528 A1; FR 2 746 385 A1; DE 198 18 631 A1; US 5,771,693.

Aufgabe der vorliegenden Erfindung ist es, den energetischen Aufwand (Kompressionsarbeit), der nach dem Stand der Technik bei der physikalischen Absorption von gasförmigen in liquiden Fluiden benötigt wird, drastisch zu reduzieren.

Im Sinne der Erfindung werden die Begriffe "Lösen / Lösung von Gasen in Liquiden" und "physikalische Absorption" gleichwertig verwendet. Beim Lösen von Gasen in Liquiden findet keine chemische Veränderung und/oder Reaktion des zu lösenden also absorbierenden Gases oder Gase statt.

Im Sinne der vorliegenden Erfindung bedeutet der Begriff "nahezu" wie z.B. "nahezu isotherm" oder "die absorbierte Gasmenge die Sättigungsgasmenge beim Enddruck nahezu erreicht", dass der entsprechende Wert genau erreicht wird, oder ein Wert innerhalb eines Abweichungsintervalls von maximal 20%, also ein Wert der von dem theoretischen, zu erreichendem Wert um maximal 20% abweicht, bevorzugt lediglich 10%, besonders bevorzugt lediglich 5%, insbesondere lediglich 3% abweicht.

Für einen nahezu isothermen Vorgang bedeutet dies, dass die Temperatur konstant bleibt, bzw. nahezu konstant bleibt, also eine Temperatur vorliegt, die um maximal 20%, bevorzugt lediglich 10%, besonders bevorzugt 5%, insbesondere 3% von der Isothermen abweicht. Analog entspricht die absorbierte Gasmenge genau der Sättigungsgasmenge beim Enddruck, bzw. in einer Alternative entspricht sie nahezu, d.h. die absorbierte Gasmenge weicht um maximal 20% von der Sättigungsgasmenge beim Enddruck ab, bevorzugt lediglich 10%, besonders bevorzugt 5% und insbesondere 3%.

Gelöst wird diese Aufgabe durch ein Verfahren zur Absorption von Gasen in Liquiden in einer Vorrichtung, bei welchem das zu absorbierende Gas komprimiert wird, das Liquid in Form von Tropfen während der Kompression in das Gas gegeben, wobei der Kompressionsdruck fortwährend bis zum gewünschten Enddruck gesteigert wird, wobei der Kompressionsdruck durch eine Volumenverringerung der Vorrichtung gesteigert wird, in welcher die Absorption stattfindet, dadurch gekennzeichnet, dass die Vorrichtung als Kolbenverdichter ausgestaltet ist.

Gegenstand der Erfindung ist darüber hinaus die Verwendung einer Vorrichtung aufweisend einen Verdichter zur Verringerung des Gasvolumens und eine Vorrichtung zur Einfuhr von Liquid in Form von Tropfen zwecks Absorption des Gases und Aufnahme der Kompressionswärme zur Durchführung dieses Verfahrens zum kompletten Lösen von Gasen in Liquiden, Abscheiden von Gasen und/oder bei der Gastrennung mittels physikalischer Wäsche, dadurch gekennzeichnet, dass die Vorrichtung als Kolbenverdichter ausgestaltet ist.

Die Grundidee der vorliegenden Erfindung ist die gleichzeitige Absorption und isotherme Kompression von Gas. Durch das erfindungsgemäße Verfahren wird erreicht, dass die während der Kompression entstehende Wärme vom Liquid aufgenommen und das Gas zugleich absorbiert wird. Eine gesonderte Vorrichtung zur Kühlung kann damit eingespart werden. Darüber hinaus wird nicht die gesamte zu absorbierende Stoffmenge des gasförmigen Fluides bis auf den gewünschten Enddruck komprimiert, da während des Prozesses die Absorption erfolgt und somit die Stoffmenge des zu komprimierenden gasförmigen Fluides fortlaufend abnimmt. Beim Erreichen des Enddruckes ist die komplette Gasmenge im Liquid absorbiert.

Der Enddruck ist abhängig vom Löslichkeitskoeffizient und der Stoffmenge des Gases, das im Liquid gelöst werden soll und kann mit dem Henry-Dalton Gesetz bestimmt werden.

In einer Ausführung wird ein Liquid ausgewählt aus der Gruppe enthaltend Wasser, organische Lösungsmittel, ionische Flüssigkeiten, Monoethanolamin (MEA) bzw. Amine oder Mischungen davon. In einer Alternative kann als Liquid vorzugsweise Wasser eingesetzt werden. In einer weiteren Alternative wird eine Mischung von MEA und mindestens einer ionischen Flüssigkeit eingesetzt.

Das Liquid wird erfindungsgemäß in Form von Tropfen, z.B. in Form von Sprays in die Absorptionszone eingedüst. Die Größe der Tropfen liegt zwischen 0,1 und 200 µm, bevorzugt 0,5-150 µm, besonders bevorzugt 1-100 µm.

In einer Ausführung sind Gase wie CO2, beispielsweise Methan, Schwefelwasserstoff oder auch Gemische, wie Rohbiogas einsetzbar.

In einer Ausführung werden Synthesegase aus der Reformierung eingesetzt enthaltend Wasserstoff und Kohlenmonoxidgemisch, sowie gegebenenfalls auch Kohlendioxid, Wasserdampf, Methan und weitere Komponenten. In einer Alternative werden Gasmischungen eingesetzt, bevorzugt Mischungen der oben genannten Gase.

Als Gas kommt vorzugsweise Kohlendioxid zum Einsatz.

Die maximal zu lösende Gasmenge entspricht der Sättigungskonzentration beim Enddruck, die nach dem Henry-Dalton Gesetz berechnet werden kann.

Das erfindungsgemäße Verfahren wird in einer Vorrichtung durchgeführt, welche einen Verdichter zur Verringerung des Gasvolumens und eine Vorrichtung zur Einfuhr von Liquid in Form von Tropfen zwecks Absorption des Gases aufweist.

Dabei wird der Kompressionsdruck durch eine Volumenverringerung der Vorrichtung gesteigert, in welcher die Absorption stattfindet. Es erfolgt eine nahezu isotherme Kompression des zu absorbierenden Gases.

Die Verringerung des Volumens der Vorrichtung führt mithin zur Erhöhung des Kompressionsdrucks im Inneren der Vorrichtung.

Die Kompression des absorbierenden gasförmigen Fluides erfolgt im Wesentlichen (also der Hauptanteil der gesamten Kompression, mindestens mehr als 50% der gesamten Kompression, bevorzugt 60%, 70%, besonders bevorzugt 80%, 90% insbesondere 91%, 92%, 93%, 94%, 95% oder mehr) durch Verringerung des Volumens der Vorrichtung, bzw. des Gefäßes, in welchem sich das zu absorbierende, gasförmige Fluid befindet. Als weitere Komponente der Kompression ist die Verringerung des dem zu absorbierenden gasförmigen Fluid zur Verfügung stehenden Volumens anzuführen, nämlich durch Anwesenheit des Absorptionsfluides, also des Liquides in welchem das gasförmige Fluid gelöst wird. Da jedoch durch die Absorption des gasförmigen Fluides in dem Liquid das Volumen des gasförmigen Fluides gleichzeitig verringert wird, erfolgt eine im Vergleich zur Volumenverringerung der Vorrichtung keine oder nur geringe (also keine wesentliche) Kompressions- bzw. Druckerhöhung durch die Anwesenheit des Liquides.

Erfindungsgemäß ist die Vorrichtung als Kolbenverdichter ausgestaltet.

Erfindungsgemäß wird die gleichzeitige Absorption und isotherme Kompression des Gases realisiert durch das Befüllen eines Druckkessels mit beweglicher Berandung. Bei dieser kann es sich erfindungsgemäß z.B. um einen Zylinder mit Kolben handeln. Dieser Kessel wird mit der zu absorbierenden Gasmenge befüllt. Das als Absorptionsmittel dienende Liquid wird in Form von Tropfen, z.B. durch Einsprayen in den Druckkessel eingedüst. Gleichzeitig wird der Druck im Kessel durch die Bewegung der Berandung, z.B. des Kolbens, erhöht.

Die bei der Kompression entstehende Wärme wird vom eingesprühten Liquid aufgenommen. Wegen der hohen Wärmekapazität des Liquides bleibt die Temperatur des Zweiphasengemisches praktisch konstant. Im Ergebnis ist der Kompressionsvorgang mithin als isotherm zu bezeichnen. Da während des Kompressionsvorgangs ständig Gas im Liquid gelöst wird und damit die nicht absorbierte Gasmenge permanent abnimmt, ist die Gasmenge, die auf Enddruck komprimiert wird, geringer als die gesamte Gasstoffmenge, die im Liquid gelöst werden soll.

Da in der vorgeschlagenen Erfindung (i) die Kompression isotherm erfolgt und (ii) nicht die gesamte zu lösende Gasstoffmenge auf den Enddruck komprimiert wird, wird der Energieaufwand für die Kompression gegenüber dem Stand der Technik in etwa halbiert, bevorzugt um 40 - 60%, falls das zu komprimierende Gas komplett gelöst wird. Dies ist insbesondere dann möglich, wenn lediglich ein Gas vorliegt, also keine Gasgemische, das in das Liquid gelöst werden soll und komprimiert wird. Die Energieersparnis bezieht sich auf die isentrope Kompression.

Falls Gemische eingesetzt werden, erfolgt zwar eine Kompression aller Komponenten des Gasgemisches, es werden jedoch nicht alle Gase gelöst oder zu gleichen Anteilen gelöst. Somit ist die Energieersparnis gegenüber der isentropen Kompression geringer, liegt aber dennoch bei mindestens 25% und je nach Anteil der nicht lösbaren Gase kann bis zu 45% erhöht werden.

Die Stoffmenge an Gas, die auf den Enddruck komprimiert wird, ist bei der vorliegenden Erfindung wesentlich kleiner als beim herkömmlichen Stand der Technik. D.h. die erfindungsgemäß besondere gleichzeitige Kompression und Absorption von Gas bietet erhebliche Vorteile gegenüber dem Stand der Technik.

Das Verfahren kann zum energieeffizienten, kompletten Lösen von Gasen in Liquiden eingesetzt werden. Hier liegt auch die maximale Energieersparnis vor. In einer Alternative erfolgt der Einsatz zur Gastrennung mittels physikalischer Wäsche. Der Einsatz des Verfahrens zur Gastrennung ist für die Abscheidung von Gasen, insbesondere Kohlendioxid geeignet.

Im Folgenden wird die Erfindung schematisch unter Bezugnahme auf die Figuren näher erläutert.

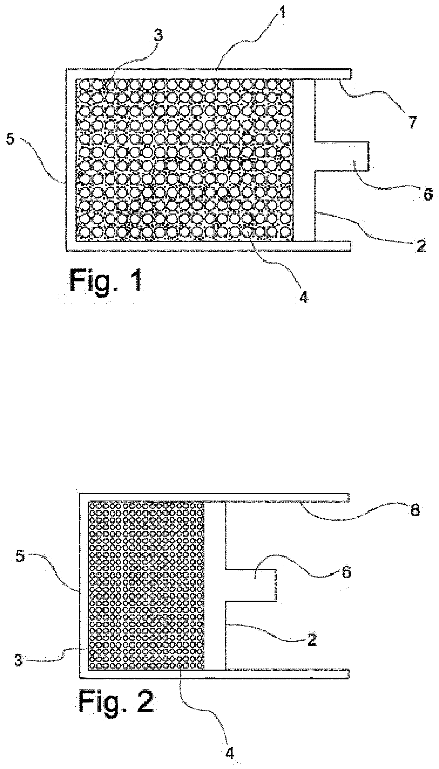

In Figur 1 ist schematisch ein Kolbenverdichter 1 dargestellt. Dieser besteht aus einem Druckkessel 5 und einem Kolben 2,6. Der Kolben 2,6 ist um die Strecke 7 in den Druckkessel 5 eingeschoben. Der in Figur 1 dargestellte Druckkessel 5 enthält die Gasphase 3 und die wässrige Phase 4 in Form von Tropfen. Der Druck liegt in der Form gemäß Figur 1 bei 1 bar, d.h. bei Atmosphärendruck.

In Figur 2 ist der Druckkessel 5 mittels des Kolbens 2,6 komprimiert. Der Kolben 2,6 ist um die Strecke 8 in den Druckkessel 5 eingeschoben. Während der Kompression wird Wasser fortwährend in Form von Tropfen 4 in das Gas 2 gegeben. In dem in der Figur 2 dargestellten Stadium haben die Liquidtropfen praktisch vollständig das Gas aufgenommen.

## Patentansprüche

1. Verfahren zur Absorption von Gasen in Liquiden in einer Vorrichtung, bei welchem das zu absorbierende Gas komprimiert wird, das Liquid in Form von Tropfen während der Kompression in das Gas gegeben wird, wobei der Kompressionsdruck fortwährend bis zum gewünschten Enddruck gesteigert wird, wobei der Kompressionsdruck durch eine Volumenverringerung der Vorrichtung gesteigert wird, in welcher die Absorption stattfindet, **dadurch gekennzeichnet, dass** die Vorrichtung als Kolbenverdichter ausgestaltet ist.

2. Verfahren nach Anspruch 1 **dadurch gekennzeichnet, dass** die durch die Kompression entstehende Wärme vom Liquid aufgenommen und das Gas zugleich absorbiert wird.

3. Verfahren nach Anspruch 1 **dadurch gekennzeichnet, dass** beim Enddruck die komplette Gasmenge im Liquid absorbiert ist.

4. Verfahren nach Anspruch 1, **dadurch gekennzeichnet, dass** eine nahezu isotherme Kompression des zu absorbierenden Gases erfolgt.

5. Verfahren nach einem der vorhergehenden Ansprüche **dadurch gekennzeichnet, dass** die Größe der Tropfen des Liquides zwischen 0,1 und 200 µm liegen.

6. Verfahren nach einem der vorhergehenden Ansprüche **dadurch gekennzeichnet, dass** ein Liquid ausgewählt wird aus der Gruppe enthaltend Wasser, organische Lösungsmittel, ionische Flüssigkeiten, Monoethanolamin (MEA) bzw. Amine oder Mischungen davon.

7. Verfahren nach einem der vorhergehenden Ansprüche **dadurch gekennzeichnet, dass** als Liquid Wasser eingesetzt wird.

8. Verfahren nach einem der vorhergehenden Ansprüche **dadurch gekennzeichnet, dass** das Gas ausgewählt wird aus der Gruppe enthaltend Kohlendioxid, CH4, H₂S, Synthesegas aus der Reformierung oder Mischungen davon.

9. Verfahren nach einem der vorhergehenden Ansprüche **dadurch gekennzeichnet, dass** Kohlendioxid als Gas eingesetzt wird.

10. Verwendung einer Vorrichtung aufweisend einen Verdichter zur Verringerung des Gasvolumens und eine Vorrichtung zur Einfuhr von Liquid in Form von Tropfen zwecks Absorption des Gases und Aufnahme der Kompressionswärme zur Durchführung des Verfahrens nach einem der Ansprüche 1 - 9 zum kompletten Lösen von Gasen in Liquiden, Abscheiden von Gasen und/oder bei der Gastrennung mittels physikalischer Wäsche, **dadurch gekennzeichnet, dass** die Vorrichtung als Kolbenverdichter ausgestaltet ist.

## Claims

1. Process for the absorption of gases in liquids in a device, in which the gas to be absorbed is compressed, the liquid is added to the gas in the form of droplets during the compression, wherein the compression pressure is increased continuously up to the desired final pressure, wherein the compression pressure is increased by a reduction in the volume of the device in which the absorption takes place, **characterized in that** the device is designed as a piston compressor.

2. Process according to claim 1, **characterised in that** the heat produced by the compression is absorbed by the liquid and the gas is absorbed at the same time.

3. Process according to claim 1, **characterised in that** the complete quantity of gas is absorbed in the liquid at the final pressure.

4. Process according to claim 1, **characterised in that** an almost isothermal compression of the gas to be absorbed takes place.

5. Process according to one of the preceding claims, **characterized in that** the size of the droplets of the liquid is between 0.1 and 200 µm.

6. Process according to one of the preceding claims, **characterized in that** a liquid is selected from the group comprising water, organic solvents, ionic liquids, monoethanolamine (MEA) or amines, or mixtures thereof.

7. Process according to one of the preceding claims, **characterized in that** water is used as the liquid.

8. Process according to one of the preceding claims, **characterized in that** the gas is selected from the group comprising carbon dioxide, CH₄, H₂S, synthesis gas from reforming or mixtures thereof.

9. Process according to one of the preceding claims, **characterized in that** carbon dioxide is used as the gas.

10. Use of a device comprising a compressor for reducing the gas volume and a device for introducing liquid in the form of droplets for the purpose of absorbing the gas and absorbing the heat of compression for carrying out the process according to one of claims 1-9 for the complete dissolution of gases in liquids, the separation of gases and/or in gas separation by means of physical scrubbing, **characterised in that** the device is designed as a piston compressor.

## Revendications

1. Procédé d'absorption de gaz dans des liquides dans un dispositif,
dans lequel le gaz à absorber est comprimé, le liquide est introduit sous forme de gouttes dans le gaz pendant la compression, la pression de compression étant augmentée en continu jusqu'à la pression finale souhaitée, la pression de compression étant augmentée par une réduction du volume du dispositif dans lequel s'effectue l'absorption, **caractérisé en ce que**
le dispositif est conçu sous forme de compresseur à piston.

2. Procédé selon la revendication 1,
**caractérisé en ce que** la chaleur produite par la compression est encaissée par le liquide et le gaz est absorbé en même temps.

3. Procédé selon la revendication 1,
**caractérisé en ce qu'**à la pression finale, la quantité totale de gaz est absorbée dans le liquide.

4. Procédé selon la revendication 1,
**caractérisé en ce qu'**il se produit une compression presque isotherme du gaz à absorber.

5. Procédé selon la revendication 1,
**caractérisé en ce que** la taille des gouttes du liquide est comprise entre 0,1 et 200 µm.

6. Procédé selon l'une des revendications précédentes,
**caractérisé en ce que** l'on choisit un liquide dans le groupe comprenant l'eau, les solvants organiques, les liquides ioniques, la monoéthanolamine (MEA) ou les aminés, ou leurs mélanges.

7. Procédé selon l'une des revendications précédentes,
**caractérisé en ce qu'**en tant que liquide, on utilise de l'eau.

8. Procédé selon l'une des revendications précédentes,
**caractérisé en ce que** l'on choisit le gaz dans le groupe comprenant le dioxyde de carbone, le CH₄, le H₂S, le gaz de synthèse issu du reformage, ou leurs mélanges.

9. Procédé selon l'une des revendications précédentes,
**caractérisé en ce qu'**en tant que gaz, on utilise du dioxyde de carbone.

10. Utilisation d'un dispositif comprenant un compresseur de réduction du volume de gaz et un dispositif d'introduction de liquide sous forme de gouttes destiné à absorber le gaz et à encaisser la chaleur de compression pour mettre en œuvre le procédé selon l'une des revendications 1 à 9 pour la dissolution complète de gaz dans des liquides, la séparation de gaz et/ou lors de la séparation de gaz par lavage physique,
**caractérisé en ce que** le dispositif est conçu sous forme de compresseur à piston.
